# EUROPEAN PATENT APPLICATION

(11) **EP 3 995 781 A1**
(43) Date of publication of application: **11.05.2022**
(21) Application number: 20205874.9
(22) Date of filing: 05.11.2020
(51) Int. Cl.: G01C 21/20, G01C 21/26, G01C 21/30

(54) **MOBILE APPARATUS, METHOD AND COMPUTER PROGRAM PRODUCT FOR DETERMINING A TRAVELLING ROUTE OF A USER**

(71) Applicant: Hitachi, Ltd., Tokyo 100-8280 (JP)
(72) Inventor: HARADA, Satoru, London, EC2Y 5AS (GB); SAKIKAWA, Shuichiro, London, EC2Y 5AS (GB); WISETJINDAWAT, Wisinee, London, EC2Y 5AS (GB)
(74) Representative: MERH-IP Matias Erny Reichl Hoffmann Patentanwälte PartG mbB

(57) **Abstract**

A mobile apparatus for determining a travelling route of a user of said apparatus comprising a data storage unit 1005; a position determination unit 1101 configured to receive position information data to determine the user position; a position detection unit 1102; a distance calculation unit 1103; and a journey estimation unit 1104 configured to calculate a sum of likelihoods λ for a plurality of possible travelling routes at the present point in time associated with the user position, wherein the likelihood is taken from a near facility list table 1113, and to select the travelling route with the highest likelihood λ at the present point in time associated with the user position as the travelling route taken by the user.

## Description

The present disclosure especially relates to an apparatus for providing travel information for a user of a mobile device, inter alia, more reliably. A corresponding method and a computer program product are provided as well. The reliability is increased, inter alia, by an improved architecture of the apparatus and the system and data traffic as well as computational complexity is reduced. Further, the determination of a travelling route taken by a user is more failsafe. Further aspects which serve to increase the reliability synergistically will become apparent from the following.

### Background

Prior art, such as US 2001/0060600 A1 describe a system for determining the start point for a passenger travelling via a transportation vehicle and an end point for a passenger travelling via a transportation vehicle using the global positioning system (GPS). Such a system includes a base station associated with a transportation vehicle and a mobile device associated with a passenger of the transportation vehicle, wherein the base station and the mobile device each include a GPS tracking unit. The base station GPS tracking unit detects location data for the transportation vehicle and the mobile device GPS tracking unit detects location data for the passenger thereby providing a pair of continuous points of reference. The base station and the mobile device transmit the transportation vehicle location data and the passenger location data to a server which monitors a relative position of the passenger relative to the transportation vehicle. The base station and the mobile device have to be in continuous contact with the server in order to provide a reliable determination if a passenger has entered or left the transportation vehicle.

### Problem and Solution

It is a technical object of the present disclosure to provide an apparatus, a method and a computer program product enabled to provide the determination of a travelling route with increased reliability and low computational effort. This object is achieved by the subject matter of the appended claims.

According to an aspect, there is proposed an apparatus for determining a travelling route (journey) of a user. The apparatus is preferably part of a mobile device or the mobile device itself. Very preferably the apparatus is integrated into a mobile device. The mobile device may be a smartphone, a tablet, a laptop, a smartwatch or any other mobile computing device. The mobile device may further preferably have a graphic user interface for displaying information to the user of the mobile device. The travelling route of a user may preferably be the route a user uses starting from a start point to reach a desired end point. The travelling route according to the subject matter may also be a part of a longer travelling route and the start or end point may also be intermediate points/stops of the travelling route. So called "facilities" may preferably be start point, end point, stopover point and/or point which is passed by the user during the journey.

The apparatus may include a data storage unit which may be configured to store facility information, such as a facility information table, which may include predetermined information on one or more facilities, a position log, such as a position log table, which may include information on a timeline of a user position and/or a facility list, such as a facility list table, which may include information on facilities in the vicinity of the user position.

The data storage unit may preferably be an internal storage unit of the said apparatus for storing, among others, the above information at least. The information may be preferably stored in a database which may be structured as a table, an array structure, a list, a database or any other suitable format. The data storage unit itself may preferably be a flash drive, a built-in memory, an SD card or the like. The term facility may also be understood, very preferably, as transportation facility which may represent a train station, a bus station, a railway, a highway, a highway service area, an airport, or the like. The user position may preferably be the position of a user using the mobile apparatus determined by a global navigation satellite system (briefly GNSS). The vicinity of the user position may be defined by a distance or interval to the user position or a predefined radius around the user position. Preferably, the vicinity may be an area around the user position, wherein the dimensions of the area may be set by the interval, such as the radius around the user position.

The apparatus may further comprise a position determination unit which may be configured to receive position information data to determine the user position based on the received information. The received information may include information on the latitude, the longitude and/or the elevation of the mobile apparatus sent by one or more satellites which are part of a GNSS, such as GPS, Galileo, or the like. The position determination unit may be embodied by hardware and/or software and it may include a receiver/transceiver or the like for receiving GNSS data. The position determination unit may be configured to determine/calculate/estimate the user position based on the received GNSS data.

Further, the position determination unit may also be able to receive other position information data from sources other than GNSS, such as wireless communication infrastructure from which a position can be, e.g., triangulated or otherwise determined. In other words, the position determination unit may include at least a receiver for wireless communication signals which carry information about the actual user position or at least information which enable the determination of the actual user position. The sources may be multiple, such as GNSS, earthbound wireless communication infrastructure, and/or the like. Even further, the position determination unit may also be configured to receive only the positional data while other units may perform the actual determination of the user position based on said received data.

Further, a position detection unit of the apparatus may be configured to receive the user position from the position determination unit (if the position determination unit has determined the position), to determine a (position) accuracy, and/or to determine an interval depending on the position accuracy. Preferably, with the interval being determined, so called "near facilities" may be extracted from the facility information table. The "interval" is preferably a radius or the length of an edge of the area/vicinity around the user. In other words, facilities with their position within said area, e.g. defined by the radius, may be called "near facilities". Further, the position detection unit or another subunit of the apparatus may store at least the position accuracy, the user position and a (pre-set) point in time associated with the user position in the position log table. Accordingly, the apparatus may check if a position accuracy is low or high based on the information received by the position determination unit and may set a radius to include more or less facilities respectively used in the determination of a travelling route taken by a user.

The term position accuracy may be understood as the momentarily attainable accuracy, when e.g. using a GNSS or the wireless communication infrastructure, by preferably taking into account data associated with the position information data. This may include the signal strength, number of available satellites for the determination of the user position, number or available wireless communication infrastructure points, etc. In other words, the accuracy or position accuracy may be determined based on the information discussed exemplarily above. Moreover, the term radius may be understood as the dimension of a preferably circular area around the user position in which one or more facilities are enclosed. Furthermore, the term near facility may designate a facility whose position is preferably enclosed within the area/vicinity surrounding the user position.

Further, the apparatus may include a distance calculation unit which may be configured to extract one or more facilities as near facilities which have their position within said area defined by the interval (vicinity), wherein the position of each extracted near facility is read from the facility information table, to determine a distance between the user position and the position of each extracted near facility to set a likelihood and/or to store the likelihood in the near facility list table.

In other words, the apparatus may extract every facility from the facility information table which lies within the interval/radius/vicinity and determine a likelihood that the user position matches with the position of said facility. Preferably the setting of a likelihood is based on the distance between the user position and the position of each facility within the radius wherein the likelihood is set higher with higher position accuracy and/or with lower distance.

The apparatus may further comprise a journey estimation unit which may be configured to calculate the sum of likelihoods for a plurality of possible travelling routes at the present point in time/user position at said time (associated with the user position) wherein the likelihood may be taken from the near facility list table to select the travelling route with the highest (sum of) likelihood at the present point in time associated with the user position as the travelling route taken by the user.

In other words, the apparatus may use the sum of likelihoods set for a plurality of facilities along a possible route and determine the route with the highest sum of likelihoods as the route taken by the user. A possible travelling route preferably may be arranged along a sequence of facilities which have been extracted as near facilities by the distance calculation unit and for which a likelihood has been set (especially the highest likelihood). This especially applies and renders the determination quite simple when the facilities are transportation facilities and the user uses these transportation facilities during the journey.

The above described apparatus is enabled to determine a travelling route of a user. The travelling route may e.g. be a route for public transportation. Technically beneficially, especially in view of reliability, the apparatus may calculate the sum of likelihoods for a plurality of possible travelling routes and select the travelling route with the highest likelihood at the present point in time associated with the user position as the travelling route taken by the user. In other words, only the most likely travelling route is determined as the route taken by the user. This moreover results in reduced computational effort of the apparatus because the number of incorrectly conducted determinations is reduced.

Also, in a preferred setup, there is no need for additional infrastructure such as a dedicated server or the like as the apparatus may be operated as a quasi-standalone system relying on externally generated position information data and facility information. The resulting quasi-unilateral data transfer helps to reduce data traffic and therefore a more reliable apparatus with reduced impact of external errors can be provided. In other words, reliability of the determination is increased also because of the independence of the apparatus from complicated wireless communication infrastructure. It is usually sufficient if at least one or a plurality of possible sources of position information data is available, and, e.g., a mobile internet connection may not be necessary at all times/uninterruptedly. The data about facilities may be stored in advance on the mobile device as map data and/or may be downloaded from a respective server when a mobile internet connection is present. The complexity of computing the sums of likelihoods is also quite low so that the computational effort is reduced without compromising the reliability of the result.

Further, preferably, the information about the facilities in the facility information table may be pre-set and may include at least a description of the facilities, multiple position coordinates of each facility and/or an attribute designating a type of transportation means, especially in case of a transportation related facility. More preferably, the description of the facility may include a name or designation of each facility and an attribute which represents a type of transportation means, wherein the transportation means can be a bus, a train, a tram, a car, an airplane or the like and the facility may be a corresponding one, such as a bus stop, a train station, a subway station, a tram stop, a highway, a motorway service area, an airport, and the like.

Especially in view of increasing the accuracy of the extraction of facilities, the use of multiple position coordinates for each facility achieves an increased reliability for the determination of the distance between the user position and the position of each extracted near facility. In other words, the distance calculation unit is enabled to more precisely extract near facilities and to set more reliable likelihoods based on the position accuracy and distance. The attribute stored in the table furthermore allows to conveniently differentiate between likelihoods of different transportation means. Hence, the sum of likelihoods for different routes and/or transportation means can be determined efficiently and with low computational effort. In other words, the provision of the specific table with the preferred data structure allows to perform the entire process of the route determination efficiently and reliably.

Further, preferably, the position detection unit may be configured to track a travelling route of a user and to store a chronological sequence of the user position and the corresponding position accuracy in the position log table. This is especially beneficial for the reliable selecting of a travelling route taken by the user because the radius for the extraction of near facilities can be continuously adapted to the position accuracy for the user journey that has a plurality of stages. This also helps in reducing the computational effort of the apparatus since especially in situations in which the position accuracy is high, the number of extracted facilities and correspondingly, the number of facilities for which a distance to the user position has to be determined and an according likelihood is set, can be reduced.

The above synergistically adds to the improved reliability of the apparatus that the determination of position accuracy for stages of a user journey enables for the determination of more precise and reliable likelihoods. The stages of a user journey may be a train station, a bus stop or a section of infrastructure linking either a train station with another or a bus stop with another. Moreover, each stage of a user journey may be a near facility which features the highest set likelihood among all near facilities extracted by the distance calculation unit. Most preferably, when the precision accuracy drops, the radius for extraction of near facilities grows which may lead to a situation in which more facilities are present for orientation during the determination of a travelling route. Thus, a travelling route of a user can be determined with higher reliability.

Further, preferably, the distance calculation unit may be configured to track the distance between the user position and the position of each extracted near facility along a possible travelling route and to store a chronological sequence of each set likelihood corresponding to each possible travelling route in the near facility list table.

The above synergistically adds to the improved reliability of the apparatus in that it enables the actualization of the set likelihood for each stage of a user journey. This is especially beneficial for the selection of a travelling route taken by the user, since the sum of likelihoods can be reliably determined for each possible travelling route in the near facility list table.

Further, preferably, the journey estimation unit may be configured to use a chronological sequence of likelihood data when selecting the travelling route with the highest likelihood at the present point in time as the travelling route taken by the user. The term chronological sequence of likelihood data may be understood as a chronological sequence of set likelihoods for each possible travelling route. This is especially beneficial for the selection of a travelling route taken by the user since said selection is preferably based on the sum of likelihoods for each stage of the user journey.

The above synergistically adds to the improved reliability of the apparatus in that the sum of likelihoods can be adapted to varying parameters such as the user position accuracy, the radius and the distance during each stage of a user journey. In other words, the journey estimation unit is enabled to more reliably select the travelling route taken by the user from the possible travelling routes in the near facility list table on the basis of adaptively determined sum of likelihoods.

Further, preferably, the distance calculation unit may be configured to reset the sum of likelihoods in predetermined intervals and/or when the distance to a near facility is below a threshold value and the position accuracy is high. The predetermined interval may preferably a period of time which is predetermined as well as the threshold value may be a predetermined maximum distance value. The resetting of the sum of likelihoods in predetermined intervals is especially beneficial for the case, in which an erroneous setting of a likelihood at one or more stages of a user journey should have occurred due to low position accuracy. Furthermore, resetting the sum of likelihoods when distance to a near facility is below a threshold value and the position accuracy is high is especially beneficial to facilitate an increase in the reliability of the apparatus because for this situation it is safe to assume that the user position and the position of an extracted near facility do match.

According to the above, the reliability of the apparatus with regard to errors such as incorrectly conducted determination of the travelling route taken by the user can be reduced by resetting the likelihood especially if a situation occurs, in which the user position is determined to be located in the vicinity of a near facility with a high position accuracy.

Further, preferably, a new facility list table may be initialized when the user starts the apparatus for determining a travelling route. This helps reliably identifying the start point of a user journey and to reduce computational effort by omitting data of previously conducted determinations once the apparatus is put into service.

In other words, the apparatus starts filling in a new near facility list table once a user embarks on their journey. This offers the advantage of creating an updated likelihood for every stage of the user journey because the distance between the user position and the position of each near facility is newly determined. Thereby, the sums of likelihoods used in the selection of a travelling route taken by the user are always up to date and therefore, the selection of a travelling route taken by the user can be performed independently of determinations of likelihoods conducted during previous user journey which may be less accurate.

Further, preferably, the position determination unit may be configured to receive the position information data from a global navigation satellite system. This facilitates reliably attaining the position information data while reducing data traffic due to the unilateral signal transmission of satellite-based navigation systems. More preferably, the global satellite navigation system may be one of the major established global satellite navigation systems such as GPS, Galileo, GLONASS or the like that may unilaterally transmit data for position determination.

The reliability of the apparatus is further increased because the position information data requires only a minimal data size to be transmitted from the global navigation satellite system to the apparatus. This reduces data traffic and/or data transmission duration and thus improves the reliability that the data can be received at the apparatus at any time. Furthermore, in addition to the before discussed technical advantage that the global navigation satellite system directly communicates with the claimed apparatus or its position determination unit, respectively, it should be noted that the global navigation satellite system communicates in a unidirectional manner with the mobile apparatus. Hence, preferably, only one unidirectional communication path is necessary, which is the path between the global navigation satellite system and the mobile apparatus.

Further, preferably, the position detection unit may be configured to determine the position accuracy of a user based on position information data received from the position determination unit.

Accordingly, the apparatus my determine if a position accuracy is low or high based on the information received by the position determination unit and may set a radius to include more or less facilities respectively used in the determination of a travelling route taken by a user. This is especially beneficial for increasing the reliability of the apparatus since, in a case in which the position determination unit determines a low position accuracy, the apparatus increases the radius for the extraction of near facilities and therefore an increased number of facilities is available for orientation.

Further, preferably, the distance calculation unit may be configured to set the likelihood depending on the position accuracy and the distance between the user position and the position of each extracted near facility. More, preferably, the likelihood increases with higher position accuracy and decreasing distance.

In other words, the apparatus may conduct a reliable way of setting the likelihoods for each extracted facility because it relies on an adaptively determined position accuracy in conjunction with the distance between the user position and the position of an extracted facility. This also results in a high reliability of the likelihood itself as not only the distance between the user position and the extracted facility is considered to set a likelihood but also the position accuracy of the user position. Therefore, possible fluctuations of the position accuracy along the user journey are taken into account.

Further there is claimed a method for selecting a travelling route taken by a user based on a user position. The method may include the steps: determining a user position, determining a position accuracy of a user position, determining a radius based on the accuracy of a user position and extracting a set of facilities that exist within the radius, setting a likelihood for the user to use each one of the extracted facilities, calculating a sum of likelihoods for a plurality of possible travelling routes and/or selecting a travelling route with the highest likelihood as the travelling route taken by the user.

In addition, the above method may further include additional steps based on the configurations of preferred aspects described above in connection with the claimed apparatus. For example, creating a time series of likelihood data and using the time series of likelihood data when selecting a travelling route taken by a user.

In other words, each configuration of the claimed apparatus shall also be encompassed by way of a method, which may be claimed by itself and/or by way of a computer program product claim.

Summarizing, a solution is provided which offers technical benefits especially with regard to reliability, reduced computational effort and decreased data transfer in the determination of a travelling route taken by a user.

In the following the claimed subject matter will be further explained based on at least one preferential example with reference to the attached drawings, wherein:
- Figure 1: shows a schematic overview of an example for a system which uses an apparatus for determining a travelling route.
- Figure 2: shows an example for determining a travelling route of a user based on the user position detected by using, e.g., a global navigation satellite system.
- Figure 3: shows an example of possible travelling routes taken by a user.
- Figure 4: shows an example of a facility list table including multiple position coordinates of each facility.
- Figure 5: shows an example of a travelling route taken by a user.
- Figure 6: shows an example of a position log table.
- Figure 7: shows an example for the extraction of near facilities.
- Figure 8: shows an example of a near facility list table.
- Figure 9: shows a flowchart of an example of steps performable by the position detection unit.
- Figure 10: shows a flowchart of an example of steps performable by the distance calculation unit.
- Figure 11: shows a flowchart of an example of steps performable by the journey estimation unit.

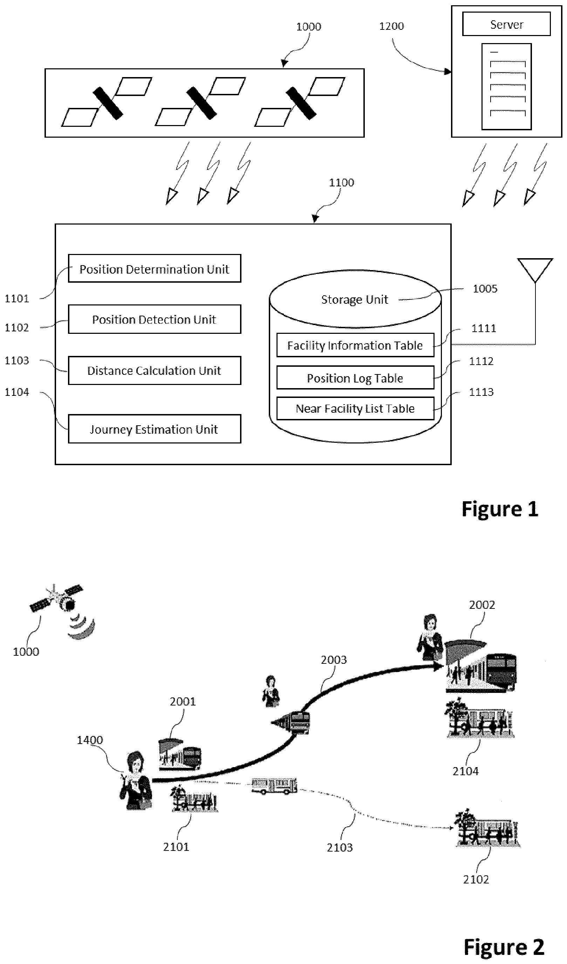

Fig. 1 shows a schematic overview of the claimed system which comprises a global navigation satellite system (GNSS) 1000, the claimed mobile apparatus 1100 and optionally a server 1200. Instead of the GNSS 1000 it may also be possible to use another source for the determination of a user position: For example, the additional or alternative source may be a mobile communication network or nodes thereof based on which the user position may, e.g., be triangulated. In the example where the global navigation satellite system 1000 is used for position determination, the GNSS 1000 sends, e.g., time signals transmitted by radio from satellites which are received by the mobile apparatus 1100.

The mobile apparatus 1100 comprises a position determination unit 1101, a position detection unit 1102, a distance calculation unit 1103, a journey estimation unit 1104 and a storage unit 1005. The storage unit 1005 comprises a facility information table 1111, a position log table 1112 and a near facility list table 1113. The mobile apparatus 1100 preferably is a smartphone, a tablet, a smart watch, a laptop, or any other portable computing device. The server 1200 stores at least predetermined information on one or more facilities which can be sent to the mobile apparatus via a wireless network connection or the like indicated by the zigzag line between the global navigation satellite system 1000 and the mobile apparatus 1100 and the zigzag line between the server 1200 and the mobile apparatus 1100 respectively. The connection between the global navigation satellite system (1000) and the mobile apparatus (1100) may preferably be unilateral (unidirectional). The connection between the server (1200) and the mobile apparatus (1100) can be bidirectional and may be preferably quasi-unilateral or mainly unilateral. The term quasi-unilateral shall preferably mean that the majority of data transferred between the server (1200) and the mobile apparatus (1100) may be mainly directed towards the mobile apparatus (1100) whereas the data transfer directed towards the server (1200) may comprise request messages for data download or the like. In other words, "quasi-unilateral" may mean that most of the data transfer or data volume is transferred from the server (1200) to the mobile apparatus (1100). Therefore, a reduced transfer of data volume between the mobile apparatus (1100) and both the server (1200) and the global navigation satellite system can be achieved.

Fig. 2 shows a schematic example for determining a travelling route of a user by using a GNSS 1000. It is assumed in this example that the user 1400 has an initial/start position in the vicinity of a train station (Station A) 2001 or a bus stop (Bus Stop C) 2101 and is about to board the railway to another train station (Station B) 2002. As the railway (Path AB) 2003 linking Station A 2001 to Station B 2002 has a course which runs in the vicinity of the bus route (Path CD) 2103 linking Bus Stop C 2101 to another bus stop (Bus Stop D) 2102, a mobile device might have a problem in determining the route taken by the user and which corresponding means of transportation was used since there are two possible routes close to each other. Furthermore, bus stop 2104 is very close to the train station 2002 and hence the further travel of the user may use another train departing from the train station 2002, the user may use the bus starting at bus stop 2104 or the user may end the journey at the station 2002. Also, this determination may be difficult for previously known technical approaches. Hereinafter, it is assumed that the user of the mobile apparatus carries the mobile device while travelling along the possible routes. The herein disclosed mobile apparatus is however configured to reliably determine which travelling route a user has taken while the computational effort is low; as will be described in the following with reference to the Figures.

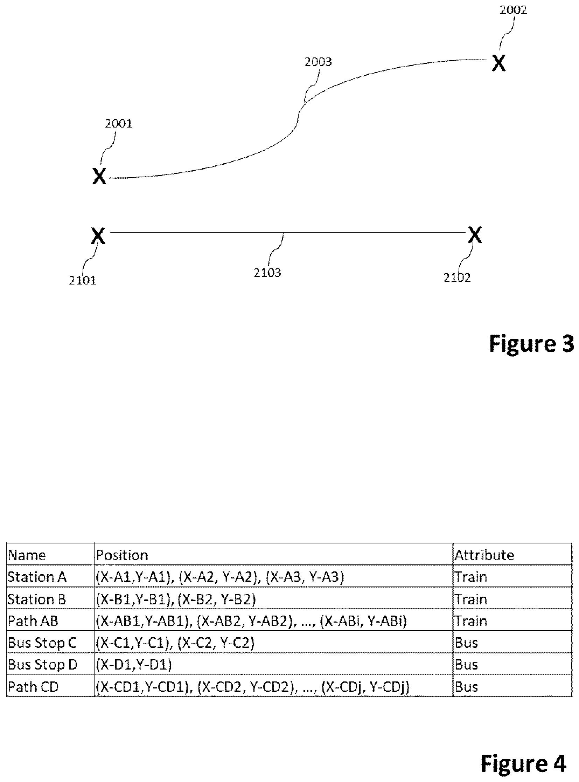

Figure 3 shows a more detailed view of the possible travelling routes depicted in Fig. 2 a user might have taken. In Figure 3 a route map for a train using Path AB 2003 and a bus using path CD 2103 is shown. Starting from Station A 2001 and Bus Stop C 2101 respectively two possible travelling routes of a user are depicted which are located in the vicinity of each other and which have a similar course. Path AB 2003 terminates at Station B 2002 and Path CD 2103 terminates a Bus Stop D 2102 respectively.

Figure 4 shows an example of a facility information table 1111 for the geographical area schematically shown in Figure 2. For explanatory purposes, each facility is represented by the exemplary descriptions introduced in Figure 3. Also, for each facility multiple position coordinates are stored in the facility list table along with an attribute such as Train (as e.g. for path AB) or Bus (as e.g. for Path CD) designating the corresponding mode of transportation. In this regard, the exemplary facility information table 1111 of Figure 4 shows three different position coordinates for Station A 2001 or a plurality of position coordinates for Path AB. Since a facility may not be limited to a small area it is especially beneficial for the reliable extraction of near facilities to store multiple coordinates to corresponding to each facility. For example, for a train station such as Train Station A it is expedient to store two sets of position coordinates e.g. X-A1, Y-A1 and X-A3, Y-A3 for each end of the train platform and one set of coordinates e.g. X-A2, Y-A2 for the entrance of the train station. In this way, the extraction of near facilities during a user journey can be performed on the basis of more points of orientation for the apparatus and therefore a more accurate and more reliable determination of likelihoods can be conducted.

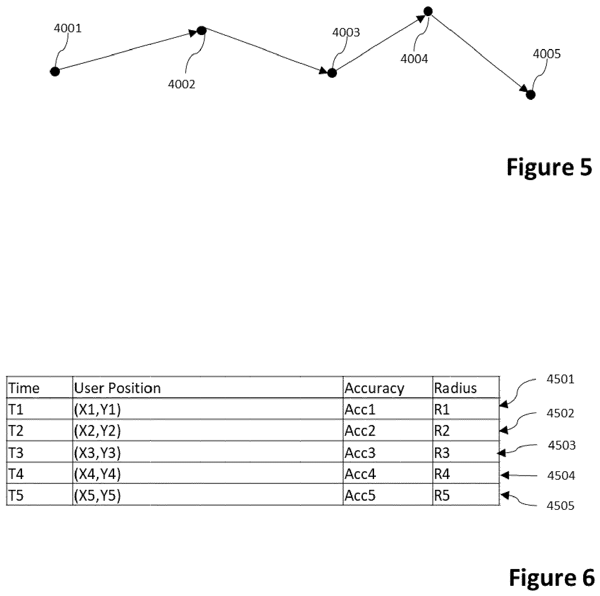

Figure 5 shows a user journey including a chronological sequence of the user position. For each stage of the user journey, the corresponding user positions 4001 to 4005 are depicted. A stage of a user journey is identified by a user position at a given point in time. Exemplarily, the black dots shown in Figure 5 represent the coordinates corresponding to a user position ranging from (X1, Y1) to (X5, Y5) at the respective points in time T1 to T5 for each stage of the user journey. The user positions and their respective points in time are stored in the position log table 1112 which is described below.

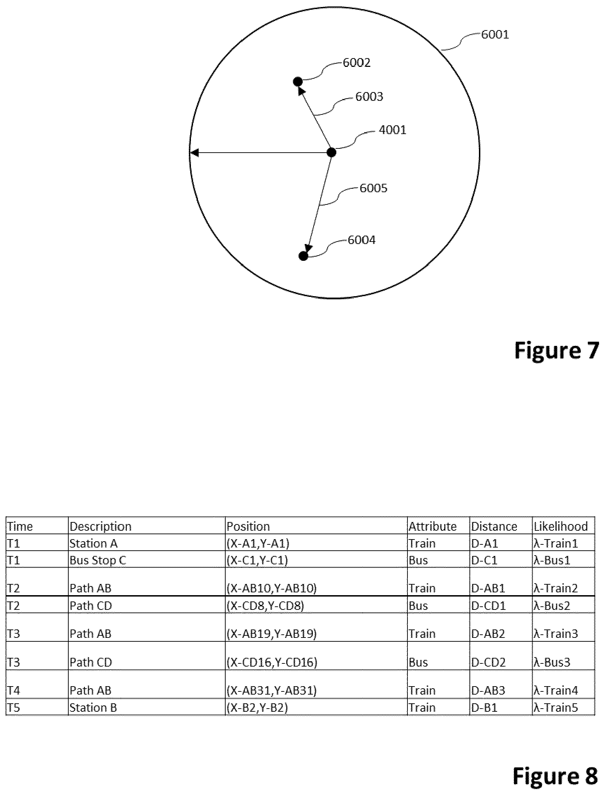

Figure 6 shows an example of a position log table 1112. For each stage of the user journey 4501 to 4505 a user position 4001 to 4005 comprising the user coordinates, a position accuracy Acc1 to Acc5 and a radius R1 to R5 set by the position detection unit 1102 are stored respectively. After receiving the user positions for each stage of a user journey from the position determination unit 1101 the position detection unit 1102 determines the position accuracy for each received user position and determines an interval, e.g. a radius, depending on the position accuracy for each user position. The determination of the position accuracy may be performed by the position detection unit 1102, e.g., by comparing the respective time signals transmitted by the set of satellites used for the determination of the user position by comparing their respective signal strengths and/or signal distortions received during the process of position determination carried out by the position determination unit 1101. The radius is then used for the extraction of near facilities which is exemplarily shown in Figure 7. Furthermore, if another source of the position detection is used, e.g., a mobile communication network then the signal strength of the reception may be used. Other options which are known for determining the accuracy of a user position can be used as well.

Figure 7 shows an example of extracting near facilities at stage 1 of a user journey. It depicts a circle 6001 with the radius R1 (as the interval) from the user position 4001 corresponding to the area used for the extraction of near facilities. Also, the circle 6001 exemplarily comprises the position of Station A 6002 and the position of Bus Stop C 6004. Within the shown circle 6001 having radius R1 the distance D-A1 6003 between the position of Station A 6002 and user position and the distance D-C1 6005 between the position of Bus Stop C 6004 and the user position are determined respectively. The determined distances D-A16003 and D-C16005 are then used by the distance calculation unit 1103 to set a likelihood for both Station A and Bus Stop C to match the user position. The distance calculation unit 1103 then sets a likelihood depending on the position accuracy and the determined distance between the user position and the position of each extracted near facility wherein the likelihood is set to be higher with increasing position accuracy and decreasing distance. For example, as shown in Figure 7, the position of Station A 6002 may have a larger distance D-A1 6003 to the user position 4001 than the distance D-C1 6005 between the user position 4001 and the position of Bus Stop C 6004. Therefore, in this example, the likelihood for the user to be at Station A 2001 during the first stage of the user journey 4501 is set lower than the likelihood for the user to be at Bus Stop C 2101 by the position detection unit 1102. Since both likelihoods are determined at the same time as it is depicted in Figure 8 while using the same position accuracy the likelihood for the user to be at Bus Stop C 2101 is set higher than the likelihood for the user to be at Station A 2001. The set likelihoods for each stage of the user journey are then stored in the near facility list table 1113 by the distance calculation unit 1103. The result of setting the likelihood by the distance calculation unit 1103 also may vary, as described above, with varying position accuracy. Most preferably, the likelihood is set to be lower with decreasing position accuracy. That means, according to a preferred example, the likelihood is set to be higher with decreasing distance between the user position and the position of a facility and increasing position accuracy. Accordingly, for each stage of a user journey a distance between the user position and the position of an extracted near facility within in the radius 6001 determined by the position detection unit 1102 is determined. The respective determined distances are then combined with the position accuracy available at the respective stage of the user journey to set a likelihood for each stage of the user journey. Preferably, the likelihood value is set to be a value between 0 and 1.

Figure 8 shows an example of a near facility list table 1113. For explanatory purposes, each facility is represented by the exemplary descriptions introduced in Figure 3. For each point in time T1 to T5 a description of the facility, a position of the facility, an attribute designating the mode of transportation, the distance between said facility and the user position and a set likelihood are stored. The descriptions may include the names of every near facility extracted within the radius around the user position. As already exemplarily described in Figure 3 the descriptions may be Station A or Bus Stop C which represent possible first stages of a user journey. At T2 Path AB or Path CD may represent possible stages of a user journey and so forth. The positions stored for each stage of the user journey may for example be the coordinates of Station A and Bus Stop C at T1 or for example Path AB and Path CD at T2. Each attribute represents the transportation mode corresponding to the determined facility and in this example may be train or bus. Other modes of transportation such as car or tram are also possible. The distance may be the distance between the user position and the extracted facility at each point in time. For example, at T1 the distance D-A1 between Station A and the user position and the distance D-C1 between Bus Stop C and the user position are shown respectively. Also, the near facility list table 1113 contains the set likelihood for each facility at each point in time. In this example, at T1 it contains the likelihood λ-Train1 for a user to be at Station A and to use the train on their journey as well as the likelihood λ-Bus1 for the user to be at Bus Stop C and use the bus on their journey. In this example, a likelihood for the user to travel by train such as λ-Train1 is set on grounds of the association of Station A 2001 with the attribute Train stored in the facility information table 1111. Accordingly, a likelihood for the user to be travelling by e.g. train or bus is set for each stage of the user journey. The above described likelihoods λ-Train1 and λ-Bus1 are set as described in the description of Figure 7 above after a new facility list table 1113 has been initialized once a user starts their journey and the apparatus is put into use.

This way the apparatus can reliably store the determined parameters leading to the determination of the sum of likelihoods by the journey estimation unit in order to select the travelling route with the highest likelihood at the present point in time at a present point in time as the travelling route taken by the user.

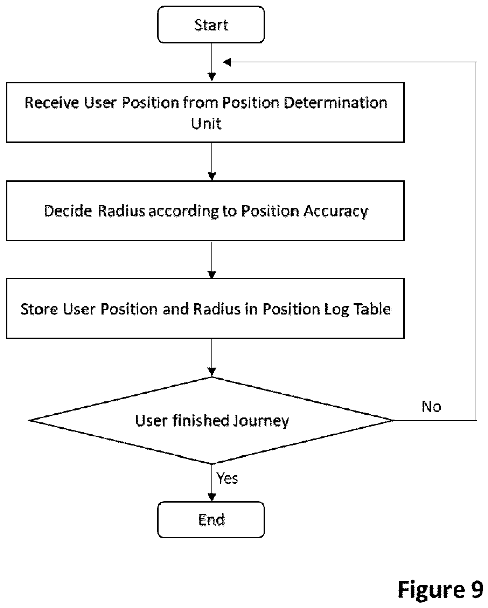

Figure 9 shows a flowchart illustrating the algorithm of location detection performed by the position detection unit 1102. The algorithm of location detection is started once the apparatus is put into service and the position detection unit 1102 receives position information data such as the user coordinates and the position accuracy from the position determination unit 1101. In the next step, the position detection unit 1102 determines the radius according to the position accuracy and stores the user position and the radius in the position log table 1112. Then the position determination unit 1101 determines if the user finished their journey. If the position determination unit determines Yes, the algorithm of location detection is ended and if the position determination unit determines No, the algorithm of location detection starts again.

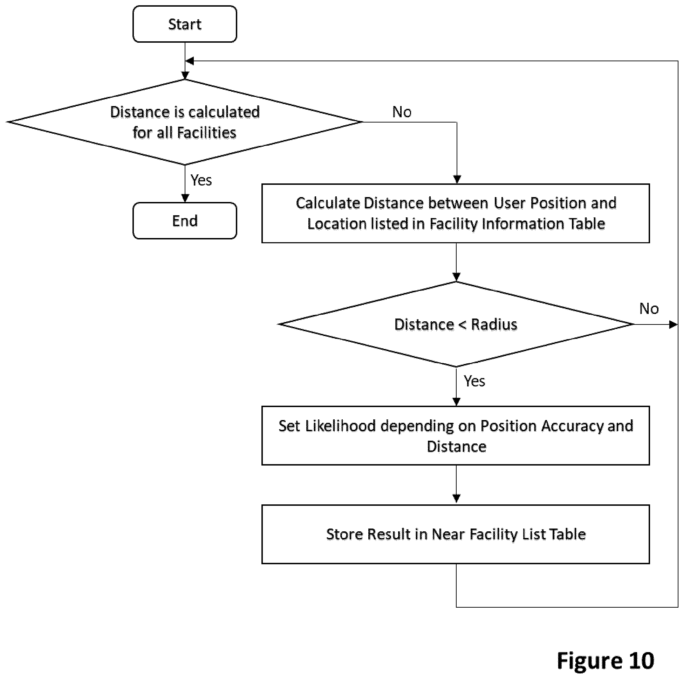

Figure 10 shows a flowchart illustrating the algorithm of distance calculation performed by the distance calculation unit 1103. The algorithm of distance calculation is started once the algorithm of location detection has ended and determines if the distance has been calculated for all facilities. If the distance calculation unit 1103 determines No, it starts with calculating the distance between the user position and the position listed in the facility information table 1111 for each facility. In the next step, the distance calculation unit 1103 determines if the determined distance has a value below the radius determined by the position detection unit 1102. If the result is No, the algorithm of distance calculation starts again. If the result is Yes, the distance calculation unit 1103 sets a likelihood depending on the position accuracy and the distance for each facility having a distance to the user position lower than the radius. Next the distance calculation unit 1103 stores the likelihood in the near facility list table 1113 and the algorithm of location detection starts again. The distance calculation unit 1103 determines once again if the distance has been calculated for all facilities. If the result is Yes, the distance calculation unit 1103 ends the algorithm of distance calculation.

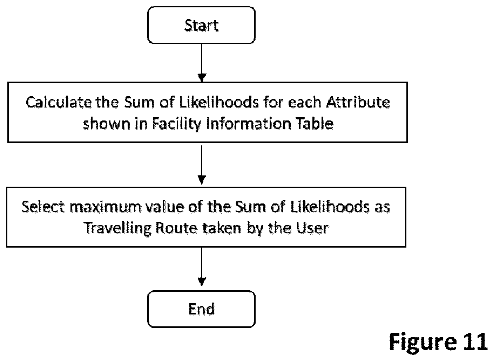

Figure 11 shows a flowchart illustrating the algorithm of journey estimation performed by the journey estimation unit 1104. The algorithm of journey estimation is started once the algorithm of distance calculation has ended and starts with the calculation of the sum of likelihoods for each attribute stored in the facility information table. The journey estimation unit 1104 then selects the attained maximum value for the sum of likelihoods as the transportation mode and correspondingly the travelling route taken by the user. Then the algorithm of journey estimation is ended. Beforehand, the setting of likelihoods by the distance calculation unit 1103 may be initialized, e.g., once the apparatus is put into use at the beginning of a new user journey. When the user travels along the stages of the user journey, the sum of likelihoods for each attribute is determined based on all set likelihoods the extracted facilities with the same attribute. This way, the aggregated likelihoods for each mode of transportation are added up to yield the sum of likelihoods based on which the travelling route with the highest sum of likelihoods is selected.

Summarizing, the present disclosure provides a reliable apparatus as well as a method and a computer program product for determining a travelling route taken by a user. Accordingly, the selection of travelling route taken by a user is performed by determining a user position, determining a radius based on the accuracy of the user position, extracting near facilities in the vicinity of the user position using said radius, setting a likelihood of a user to be taking a possible travelling route for each stage of a user journey based on the distance between the user position and the position of a near facility, adding up the likelihoods acquired at each stage of a user journey along a possible travelling route and selecting the possible travelling route with the highest sum of likelihoods as the travelling route taken by the user.

This offers the advantage of an especially reliable determination of a travelling route taken by a user because, for example, among other benefits, the determination of a radius for the extraction of facilities simultaneously enables the for the reduction of computational effort due to deliberate reduction of likelihoods to be set for a high position accuracy as well as the more reliable setting of likelihoods due to the increased number of extracted facilities for a low position accuracy. Moreover, the described setting of likelihoods leads to a more reliable sum of likelihoods that provide the basis for the selection of a travelling route taken by a user due to taking variations of the position accuracy along a user journey into account.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

It should be noted that terms such as "server" and "processor" may be used herein to describe devices that may be used in certain embodiments and should not be construed to limit to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different embodiments or aspects described herein may be combined to form other embodiments.

### List of reference numerals

- 1000: Global Navigation Satellite System
- 1100: Mobile Apparatus
- 1101: Position Determination Unit
- 1102: Position Detection Unit
- 1103: Distance Calculation Unit
- 1104: Journey Estimation Unit
- 1105: Storage Unit
- 1111: Facility Information Table
- 1112: Position Log Table
- 1113: Near Facility List Table
- 1200: Server
- 2001: Station A
- 2002: Station B
- 2003: Path AB
- 2101: Bus Stop C
- 2102: Bus Stop D
- 2103: Path CD
- 2104: Bus Stop E
- 4001: User Position at Stage 1 of User Journey
- 4002: User Position at Stage 2 of User Journey
- 4003: User Position at Stage 3 of User Journey
- 4004: User Position at Stage 4 of User Journey
- 4005: User Position at Stage 5 of User Journey
- 4501: Stage 1 of User Journey
- 4502: Stage 2 of User Journey
- 4503: Stage 3 of User Journey
- 4504: Stage 4 of User Journey
- 4505: Stage 5 of User Journey
- 6001: Circle with Radius R1
- 6002: Position of Station A
- 6003: Distance D-A1
- 6004: Position of Bus Stop C
- 6005: Distance D-C1

## Claims

1. A mobile apparatus for determining a travelling route of a user of said apparatus comprising:
a data storage unit (1005) configured to store a facility information table (1111) which includes information on one or more facilities, a position log table (1112) which includes information on a timeline of a user position and a near facility list table (1113) which includes information on near facilities;
a position determination unit (1101) configured to receive position information data to determine the user position based on the received information;
a position detection unit (1102) configured to receive the determined user position from the position determination unit (1102), to determine a position accuracy, to determine an interval depending on the position accuracy, based on which facilities are extractable from the facility information table (1111), and to store the position accuracy, the user position and a present point in time associated with the user position in the position log table (1112);
a distance calculation unit (1103) configured to extract one or more facilities as near facilities which have their position within an area defined by said interval, wherein the position of each extracted near facility is read from the facility information table (1111), to determine a distance between the user position and the position of each extracted near facility, to set a likelihood (λ) and to store the likelihood (λ) in the near facility list table (1113), the likelihood increasing with increasing position accuracy and decreasing distance; and
a journey estimation unit (1104) configured to calculate the sum of likelihoods (λ) for a plurality of possible travelling routes at the present point in time associated with the user position, wherein the likelihood is read from the near facility list table (1113), and to select the travelling route with the highest sum of likelihoods (λ) at the present point in time associated with the user position as the travelling route taken by the user.

2. The mobile apparatus according to claim 1, wherein
the information about the facilities in the facility information table (1111) is pre-set and includes a description of facilities, multiple position coordinates of each facility and an attribute designating a type of transportation means.

3. The mobile apparatus according to at least one of the previous claims, wherein
the position detection unit (1102) is configured to track a travelling route of a user and to store a chronological sequence of the user position and the corresponding position accuracy in the position log table (1112).

4. The mobile apparatus according to claim at least one of the previous claims, wherein
the distance calculation unit (1103) is configured to track the distance between the user position and the position of each extracted near facility along a possible travelling route and to store a chronological sequence of each set likelihood corresponding to each possible travelling route in the near facility list table (1113).

5. The mobile apparatus according to claim 4, wherein
the journey estimation unit (1104) is configured to use a chronological sequence of likelihood data when selecting the travelling route with the highest likelihood (λ) at the present point in time as the travelling route taken by the user.

6. The mobile apparatus according to at least one of the previous claims, wherein
the distance calculation unit (1103) is configured to reset the sum of likelihoods in predetermined intervals or when the distance to a near facility is below a threshold value and the position accuracy is high.

7. The mobile apparatus according to at least one of the previous claims, wherein
a new facility list table (1113) is initialized when the user starts the mobile apparatus for determining a travelling route.

8. The mobile apparatus according to at least one of the previous claims, wherein
the position determination unit (1101) is configured to receive the position information data from a global navigation satellite system.

9. The mobile apparatus according to at least one of the previous claims, wherein
the position detection unit (1102) is configured to determine the position accuracy of a user based on position information data received from the position determination unit (1101).

10. The mobile apparatus according to at least one of the previous claims, wherein
the distance calculation unit (1103) is configured to set the likelihood (λ) depending on the position accuracy and the distance between the user position and the position of each extracted near facility.

11. The mobile apparatus according to at least one of the previous claims, wherein
the distance calculation unit (1103) is configured to reset the likelihood in predetermined intervals or when the distance to a near facility is below a threshold value and the position accuracy is high.

12. A method for selecting a travelling route taken by a user based on a user position comprising:
determining a user position,
determining a position accuracy of the user position,
determining an interval based on the accuracy of a user position and extracting a set of facilities that exist within an area defined by the interval,
setting a likelihood (λ) for the user to use each one of the extracted facilities,
calculating a sum of likelihoods (λ) for a plurality of possible travelling routes, and
selecting a travelling route with the highest sum of likelihoods (λ) as the travelling route taken by the user.

13. The method according to claim 12 further comprising:
creating a time series of likelihood data, and
using the time series of likelihood data when selecting a travelling route taken by a user.

14. A computer program product storable in a memory of the mobile device comprising instructions which, when carried out by a mobile device, cause the mobile device to perform the method according to at least one of claims 12 to 13.
